# EUROPEAN PATENT APPLICATION

(11) **EP 2 736 040 A2**
(43) Date of publication of application: **28.05.2014**
(21) Application number: 13183041.6
(22) Date of filing: 04.09.2013
(51) Int. Cl.: G09G 5/00

(54) **Display method of OSD system**

(30) Priority: 22.11.2012 TW 101143698
(71) Applicant: ASUSTeK Computer Inc., Peitou, Taipei (TW)
(72) Inventor: Hsu, Yi-Hsun, Taipei (TW)
(74) Representative: Habermann, Hruschka & Schnabel

(57) **Abstract**

A display method of an OSD system (110) is provided. The method is used on the display (100). The OSD system (110) of the display (100) includes various built-in patterns to perform an input operation on the display (100) directly. The OSD system (110) selects and/or displays a pattern on a screen (104), the display of the pattern is performed by the OSD system (110) individually without using the computer or other device. When the computer (200) executes a program, the screen (104) displays the frame of the program. The OSD system (110) of the display (100) receives an input operation to select a built-in pattern of the OSD system (110), the pattern overlaps the frame of the program, and the screen (104= displays the pattern and the frame of the program on the screen (104) simultaneously.

## Description

### BACKGROUND OF THE INVENTION

### 1. Field of the Invention

This invention relates to a display method and, more particularly to a display method by using an on screen display (OSD) system.

### 2. Description of Related Art

A frame displayed on a display is provided by executing software via a process unit. However, the function is only provided by the software, especially game software, usually cannot meet the demands of users, which is rather inconvenient for the user.

The game software mainly includes shooting games and real-time strategy online games. The shooting games provide the front sight for the user to aim at a target. However, since the use habits of different users are different, a same size and a same color of a front sight cannot meet the demands for all users, and some games do not provide more front sights for the user to select. The real-time strategy online games provide various tasks for users, and the timers for completing the tasks are various according to the difficulties. Consequently, a time reminding function is needed, however, not all on-line real-time strategy games provide the time reminding functions.

As a result, users usually download corresponding plug-in programs when having additional demands. However, the plug-in program may include a virus, and the plug-in program occupies the source of the processor and affects the performance of a processor.

However, the cooling fans for heat dissipation to the card module just fix in the connector via the protruding portion of the bolt. Thus, there still not have a suitable design to solve the problems of the card module's plugging and disassembling and the card module's low heat dissipating efficiency at the same time.

### SUMMARY OF THE INVENTION

A display method by using the OSD system is provided. The OSD system of the display displays the pattern built in the OSD or OSD options independently and it is not executed by the processor of the computer.

The method is used in a display, when the computer executes a program and the display displays the frame of the program, an inputted operation is executed on the screen to select and display a corresponding pattern built in the OSD system on the screen, and the pattern overlaps the frame of the program simultaneously.

The display method includes: displaying OSD options including various patterns on the screen; selecting and displaying one of the patterns on the screen; overlapping the pattern on the frame of the program and displaying the frame of the program and the pattern on the screen simultaneously.

In one embodiment, when the program is a shooting game, the pattern built in the OSD may be a shooting front sight pattern, and the shooting front sight pattern overlaps the frame of the program, and the central point of the screen.

In one embodiment, when a program is executed, the patterns built in the OSD is a timer, the timer overlaps the frame of the program. The timer can count up or count down, the time of the timer can be set and adjusted by the OSD system according to an input signal, and the timer is drove by a clock signal of the display to count time.

In one embodiment, the shooting sight patterns have various appearances and colors, and the timers have various appearances, colors and counting times.

These and other features, aspects and advantages of the present invention will become better understood with regard to the following description, appended claims, and accompanying drawings.

### BRIEF DESCRIPTION OF THE DRAWINGS

FIG.1 is a block diagram showing an OSD system in one embodiment;

FIG.2A is a schematic diagram showing a first hierarchy OSD option in one embodiment;

FIG.2B is a schematic diagram showing a second hierarchy OSD option in one embodiment;

FIG.2C is a schematic diagram showing a second hierarchy OSD option in another embodiment;

FIG.3 is a flow chart showing a display method of the OSD system in one embodiment;

FIG.4A is a schematic diagram showing that a front sight pattern is displayed on the shooting game according to a display method in one embodiment; and

FIG.4B is a schematic diagram showing that positions of a timer can be selected on a screen according to a display method in one embodiment.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

A display method extra functions of software by using OSD system is provided, it does not need executed any software or program, function options are provided by the OSD system in a display, and corresponding patterns are displayed directly. The processing resources of a microprocessor in a host are not occupied and the processing speed of the host is not affected.

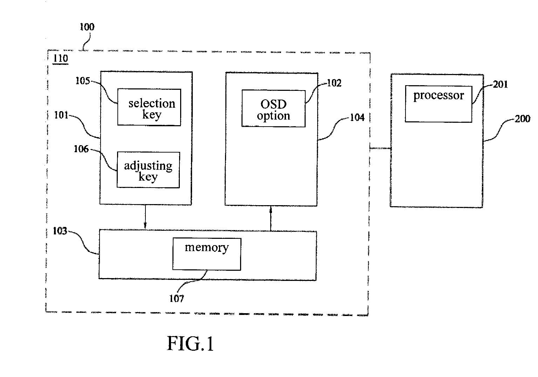

FIG.1 is a block diagram showing an OSD system in one embodiment. The OSD system 110 includes an OSD control module 101, a screen 104 and a control circuit 103. The OSD system 110 is disposed in the display 100. The screen 104 is used to display an OSD option 102.

The OSD control module 101 is a peripheral control device for a user to select the OSD option 102 and adjust the selected OSD option 102, such as a key at a casing of the display 100. In one embodiment, the OSD control module 101 may include at least a selection key 105 and an adjusting key 106. The user can send out a signal to the control circuit 103 by the OSD control module 101.

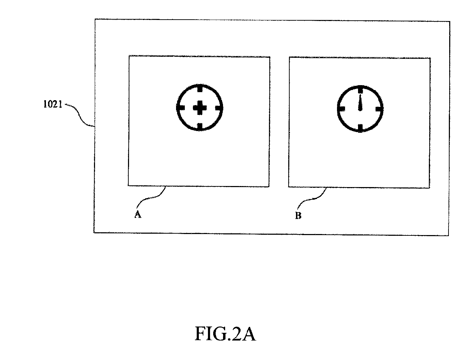

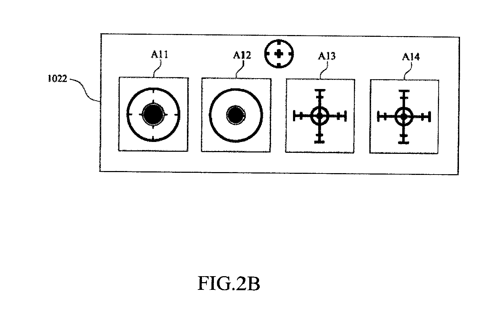

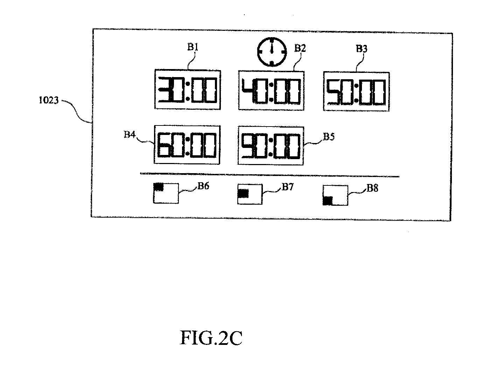

In one embodiment, the OSD option 102 at least includes one pattern such as a front sight pattern or a timer. In another embodiment, the OSD option 102 is a hierarchical structure, as shown in FIG. 2A, FIG.2B and FIG.2C, the OSD option 102 includes a first hierarchy OSD option 1021 and second hierarchy OSD options 1022 and 1023. The first hierarchy OSD option 1021 may be a main option including a front sight class pattern A and a timer class pattern B. The second hierarchy OSD option 1022 includes various front sight patterns A1, A2, A3 and A4 of the front sight class pattern A. The second hierarchy OSD option 1023 includes various timers B1, B2, B3, B4 and B5 of the timer class pattern B and position patterns B6, B7 and B8 which represent the position of the timer in the screen 104 for the user to select. That is, after selecting a pattern in the first hierarchy OSD option 1021, the user can select a pattern from various patterns in second hierarchy OSD options 1022 or 1023.

The control circuit 103 includes a memory 107 to store the display parameters of the OSD option 102 such as appearance parameters, position parameters of the patterns in the screen 104, color parameters of the patterns and the functions connected to the patterns. The control circuit 103 controls the memory 107 to output corresponding display parameters to make the screen 104 display the selected OSD option 102 according to the instruction outputted by the OSD control module 101. In one embodiment, the OSD option 102 of the front sight patterns sets a position parameter according to the pixel value of the screen 104 to make the pixel central point of the screen 104 used as the display center to display.

In another embodiment, the OSD option 102 of the timer links to a timing function to drive the timer to count time (count up or count down) according to a clock signal of the display. Furthermore, the OSD control module 101 controls the control circuit 103 to adjust the display parameters in the memory 107 according to an input signal, so as to change the front sight pattern, the color of the timer, or the counting time.

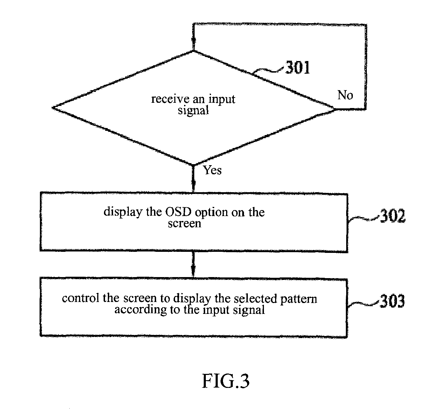

FIG.3 is a flowchart showing a display method by using the OSD system. In step 301, determining whether an input signal for displaying the OSD option is received. If the determining result is "YES", the step 302 is executed; the control circuit 103 controls the screen 104 to display an OSD option 102 for the user to select. If the determining result is "No", step 301 is executed again to determine whether a input signal for displaying the OSD option is received. Then, in step 303, the control circuit 103 controls the screen 104 to display the selected OSD option 102 according an input signal.

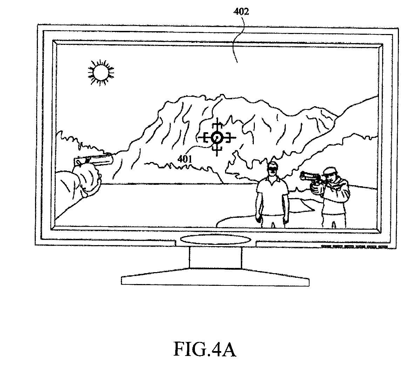

In one embodiment, please refer to FIG.1, when the display 100 is coupled to a computer 200, a processor 201 of the computer 200 executes a shooting game, as shown in FIG.4A. Since the habits of the users are different, the size and the color of the front sight cannot meet the requirement of each user. Consequently, various front sight patterns are needed. The OSD system in the embodiment can provide an extra front sight pattern 401 displayed in the center of a screen 402 for the user to take aim at in executing the shooting game. For example, the user operates the OSD control module 101 at the casing of the display 100 to send out the instruction to make the screen 104 displays the OSD option 102 of the front sight pattern for the user to select.

In step 301, it determines if an input signal is received. Then, in step 302, the control circuit 103 controls the memory 107 to output corresponding display parameters to make the screen 104 display the OSD option 102 on the display, the user can operates the OSD control module 101 at the casing of the display 100 to input a signal to select the front sight pattern. In step 303, the control circuit 103 controls the screen 104 to display the selected pattern according to the input signal. In one embodiment, the selected front sight pattern is displayed by taking the pixel central point of the screen 104 as the displayed center according to the position parameter. The front sight pattern overlaps the screen of the game to help the user to take aim.

If the program is a real-time strategy online game which has a time limit for completing the task, and the program does not provide the timing function, according to the method in the embodiment, the OSD system provides a timer to count time, which is omitted herein. Moreover, the timer is connected with a timing function according to setting, and the time is driven according to a clock signal of the display to count time (counting up or counting down) in the real-time strategy online game or other programs. The pattern of the timer overlaps the screen of the real-time strategy program or other programs to assistant the user in controlling time. Additionally, the user can select the position of the timer on the screen, and the user can adjust the position of the timer via the OSD system.

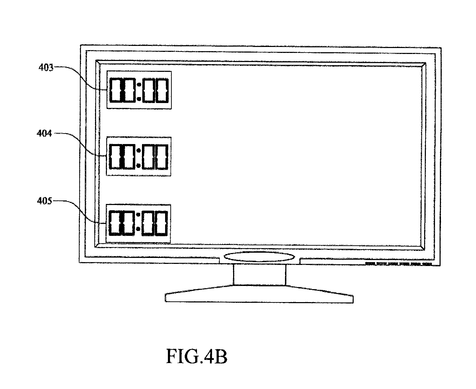

As shown in FIG.4B, various positions 403, 404 and 405 of the timer are provided on a screen for the user to select, the user can input a signal by operating the OSD control module 101 at the casing of the display 100 to select the position of the timer. And when the user selects a position of the timer, the timer is displayed at the selected position.

In another embodiment, the OSD option 102 in step 302 may include the first hierarchy OSD option 1021 and the second hierarchy OSD options 1022 and 1023 as shown in FIG.2A, FIG.2B and FIG.2C. When the user operates the OSD control module 101 at the casing of the display 100 to send out an input signal of displaying the OSD option, as shown in step 301, it determines that an input signal of displaying the OSD option is received. In step 302, the control circuit 103 controls the screen 104 to display the first hierarchy OSD option 1021 including the front sight pattern A and the timer pattern B for the user to select according to the display parameters stored in the memory 107. The user operates the OSD control module 101 at the casing of the display 100 to send out an instruction to the control circuit 103 to select. When the front sight pattern A is selected, the control circuit 103 make the screen 104 display the front sight patterns A1, A2, A3 and A4 of the second hierarchy OSD option 1022 corresponding to the display characteristic parameter for the user to select according to the input signal. The user operates the OSD control module 101 at the casing of the display 100 again to input a signal to select one from the front sight patterns. Then, in step 303, the control circuit 103 controls the screen 104 to display the selected front sight pattern according to the input signal.

In sum up, the extra function of the software is displayed by the OSD system of the display, and it does not occupy the source of the microprocessor of the host and would not affect the processing speed. Moreover, it does not need to download the software from the network, and it has no risk of downloading the virus.

It will be apparent to those skilled in the art that various modifications and variations can be made to the structure of the present invention.

## Claims

1. A display method of an on screen display (OSD) system (110), applied to a display (100), wherein when a computer (200) executes a program and a frame of the program is displayed on a screen (104), the display (100) receives an input operation, the OSD system (110) of the display (100) displays a pattern on the screen (104) according to the input operation, the display method **characterized by** comprising:
displaying an OSD option (102) on the screen (104), wherein the OSD option (102) includes a plurality of patterns;
selecting one of the patterns to display on the screen (104) according to an input signal; and
overlapping the selected pattern on the frame of the program, wherein the screen (104) displays the frame of the program and the pattern simultaneously.

2. The display method according to claim 1, **characterized in that** the patterns of the OSD option (102) are front sight patterns.

3. The display method according to claim 2, **characterized in that**:
the front sight pattern overlaps the frame of the program and is in the central point of the screen (104) when the program is a shooting game.

4. The display method according to claim 1, **characterized in that** the patterns of the OSD option (102) are timers and the timers have functions of counting up or counting down.

5. The display method according to claim 4, **characterized by** comprising:
operating the OSD system (110) to adjust and set the timer for counting up or counting down.

6. The display method according to claim 1, **characterized by** comprising: operating the OSD system (110) to adjust a display coordinate of the pattern to change the position of the pattern on the screen (104).

7. The display method according to claim 1, **characterized in that** the patterns has various appearances and colors.

8. The display method according to claim 1, **characterized in that** the OSD system (110) further includes an OSD control module (101) and a control circuit (103) coupled to the OSD control module (101) and the screen (104).
